# EUROPÄISCHE PATENTSCHRIFT

(11) **EP 0 595 121 B1**
(45) Veröffentlichungstag und Bekanntmachung des Hinweises auf die Patenterteilung: **02.01.1997**
(21) Anmeldenummer: 93116607.8
(22) Anmeldetag: 14.10.1993
(51) Int. Cl.: C08F 287/00, C08F 279/02

(54) **Verfahren zur Herstellung von schlagzähem Polystyrol**
Process for the production of high-impact polystryrene
Procédé de production de polystyrène résistant au choc

(30) Priorität: 24.10.1992 DE 4235977
(43) Veröffentlichungstag der Anmeldung: 04.05.1994
(73) Patentinhaber: BASF Aktiengesellschaft, 67063 Ludwigshafen (DE)
(72) Erfinder: Knoll, Konrad, Dr., D-68161 Mannheim (DE); Loth, Wolfgang, Dr., D-67098 Bad Duerkheim (DE); Gausepohl, Hermann, Dr., D-67112 Mutterstadt (DE)

(56) Entgegenhaltungen:
- DE-A- 2 013 468
- DE-A- 2 140 081
- FR-A- 2 008 299
- US-A- 4 153 647
- D.R. PAUL AND L.H. SPERLING 'Multicomponent Polymer Materials' 26. August 1984 , AMERICAN CHEMICAL SOCIETY , WASHINGTON, US J.M. Widmaier et al. "Extraction Studies and Morphology of physical-Chemical Interpenetrating Polymer Networks based on Block Polymer and Polystyrene" p.195-209

## Beschreibung

Die Erfindung betrifft ein Verfahren zur kontinuierlichen Herstellung einer monomerenarmen schlagzähen Formmasse auf Basis Styrol oder einer anderen vinylaromatischen Verbindung in Gegenwart eines kautschukelastischen Blockcopolymerisats auf Basis eines Alkadiens und einer aromatischen Vinylverbindung.

Schlagzähe Formmassen auf Basis Polystyrol werden üblicherweise durch radikalische Polymerisation von Styrol in Gegenwart einer Elastomerkomponente hergestellt.

Der Umsatz von Styrol beträgt dabei i.a. 90 - 95 %. Der nicht polymerisierte Rest und eventuelle Oligomere sowie das Lösungsmittel müssen möglichst vollständig entfernt ("entgast") werden, was in der Praxis zu erheblichen Schwierigkeiten führt. Es hat nicht an Versuchen gefehlt, die Entgasung der Polystyrolformmassen zu verbessern. So wurde versucht, durch Schleppmittel wie Stickstoff, Wasser, Methanol oder Ethanol den Restmonomerspiegel abzusenken oder es wurden spezielle Entgasungseinrichtungen angefertigt, um eine verbesserte Entgasungswirkung zu erzielen.

Der Nachteil der nachträglichen Entfernung der verbliebenen Monomeren aus Polystyrol besteht jedoch darin, daß vergleichsweise hohe Temperaturen angewandt werden müssen, unter denen sich ein Polymerisations-Depolymerisationsgleichgewicht einstellt. Die Folge ist, daß stetig neues Monomer und auch Oligomere zurückgebildet werden und infolgedessen bisher immer Restmonomermengen von mindestens 100 ppm zurückbleiben.

Andererseits ist bekannt, daß man mittels der sogenannten anionischen Polymerisation einen vollständigen Umsatz und damit einen sehr geringen Restmonomerspiegel erzielen kann. Jedoch werden mit dieser Methode bisher nur entweder Homopolymere von Styrol oder Butadien (oder deren Äquivalenten) oder sogenannte Blockcopolymere hergestellt. Die Gewinnung von schlagzähem Polystyrol mittels anionischer Polymerisation wurde dagegen nicht in Betracht gezogen, was überraschend ist, da die Herstellung speziell der Blockcopolymeren, d.h. der zur Herstellung von schlagzähem Polystyrol verwendeten Kautschuksorten schon lange auf diesem Wege geschieht.

Es bestand daher die Aufgabe, schlagzähe Formmassen auf Basis vinylaromatischer Verbindungen mit üblichem mechanischem Verhalten und geringen Restmonomergehalten herzustellen.

Die Aufgabe wird erfindungsgemäß dadurch gelöst, daß man ein Blockcopolymerisat auf Basis eines Alkadiens und einer vinylaromatischen Verbindung in einem Lösungsmittel löst, ggf. Reste an polaren Verunreinigungen, vornehmlich Wasser, entfernt, d.h. z.B. mit einer geeigneten metallorganischen Verbindung austitriert und in dieser Lösung die vinylaromatische Verbindung anionisch kontinuierlich in einer Reaktorkaskade zur thermoplastischen Formmasse umsetzt, wobei der Monomerstrom auf die einzelnen Reaktoren (Reaktionsapparate) aufgeteilt wird.

Zweckmässig wird als Blockkautschuk ein Styrol-Butadien-Blockcopolymerisat eingesetzt mit einem Gewichtsverhältnis von Styrol zu Butadien von 5 : 95 bis 65 : 35.

Der Vorteil des erfindungsgemäßen Verfahrens besteht insbesondere darin, daß sich auf diese Weise schlagzähe thermoplastische Formmassen mit einem Restmonomerengehalt von weniger 10 ppm herstellen lassen. Es treten auch keine oligomeren Produkte auf, die bei der Verarbeitung der thermoplastischen Formmassen zu unerwünschtem Formbelag führen können. Außerdem führt er zu einem recht einfachen, leicht beherrschbaren Verfahrensaufbau.

Die Reaktorkaskade besteht aus mehreren Reaktionsapparaten oder -zonen, die jeweils mit einem Anschluß für die Zufuhr des Monomeren, d.h. der vinylaromatischen Verbindung versehen sind und deren erste Zone zusätzlich Anschlüsse für die Zufuhr von Kautschuklösung und den Initiator hat.

Als Reaktionsapparate für eine Reaktorkaskade eignen sich Apparate, wie sie zur Herstellung von schlagfestem Polystyrol durch Radikalpolymerisation verwendet werden und beispielsweise in US 3 658 946 oder US 3 660 535 ausführlich beschrieben sind. Demnach lassen sich für die einzelnen Apparate sowohl kontinuierlich durchflossene Rührkessel als auch Röhrenreaktoren (sog. Polymerisationstürme) verwenden. Bevorzugt wird für das erfindungsgemäße Verfahren eine 2-Kessel- 2-Turm-Kaskade. Im Gegensatz zur radikalisch verlaufenden Polymerisation ist es jedoch wesentlich und notwendig, daß der Monomerstrom je nach dem gewünschten Umsatz auf jede der vorhandenen Reaktionszonen aufgeteilt wird. Vom Verfahrensprinzip her kann man den oder die Kessel als rückvermischte Reaktionszonen ansehen, während in den Turmreaktoren eine Pfropfenströmung überwiegt.

Bei geeigneter Reaktionsführung im letzten Turm der Kaskade erreicht man einen Umsatz über 99,8%. Um einen Umsatz über 99,99% zu erhalten, ist es zweckmäßig, der Reaktorkaskade noch eine kurze sog. Verweilzeitstrecke nachzuschalten, in der keine Rückvermischung mehr stattfindet, d.h. ausschlieblich eine Pfropfenströmung herrscht. Diese kann z.B. aus einem Rohrreaktor oder statischen Mischer bestehen, d.h. eben Vorrichtungen, die ohne Rückvermischung arbeiten.

Die Polymerisation kann bei 40°C bis 150°C durchgeführt werden. Vorzugsweise verwendet man jedoch Temperaturen zwischen 60 und 90°C, da bei geringer Temperatur die Polymerisationsgeschwindigkeit vergleichsweise klein ist und bei höherer Temperatur zunehmend spontaner Abbruch der lebenden Kettenenden beobachtet wird. Das Molekulargewicht der thermoplastischen Formmasse wird über das Verhältnis des Initiators zum Monomeren gesteuert und kann somit sehr genau eingestellt werden. Die Molekulargewichtsverteilung ergibt sich einerseits aus der Verweilzeit der Polymermischung in den einzelnen Reaktoren und kann andererseits durch Aufteilung des Initiatorzusatzes auf mehrere oder alle Reaktionsapparate gesteuert werden.

Nach Austritt der Polymerlösung aus der letzten Reaktionszone werden die lebenden Kettenenden zweckmäßig mit einer protonenaktiven Substanz abgebrochen. Als solche eignen sich z.B. Alkohole wie Methanol, Ethanol, Isopropanol oder besonders CO₂ und Wasser.

Die so behandelte Polymerlösung kann in üblicher Weise aufgearbeitet, d.h. vom Lösungsmittel befreit und mit üblichen Zusätzen wie Stabilisatoren, Gleitmittel oder Antistatika versehen werden.

Als Lösungsmittel für das erfindungsgemäße Verfahren eignen sich Kohlenwasserstoffe, die unter den Reaktionsbedingungen inert sind und vorzugsweise 4 - 12 Kohlenstoffatome enthalten, wie beispielsweise Toluol, Ethylbenzol, Methylcyclohexan, Cyclohexan oder Xylol sowie gewisse Ether, z.B. Tetrahydrofuran oder Diisopropylether. Wesentlich ist, daß diese Lösungsmittel frei von protonenaktiven Verunreinigungen sind, die den metallorganischen Initiator zersetzt würden. Sie werden deshalb zweckmäßigerweise vor ihrer Verwendung destilliert und scharf getrocknet. Die Restspuren von Verunreinigungen, vornehmlich Wasser, titriert man in Gegenwart ganz geringer Mengen der zu polymerisierenden vinylaromatischen Verbindung bei Raumtemperatur aus.

Zur Initiierung der polymerisation vinylaromatischer Verbindungen nach dem erfindungsgemäßen Verfahren lassen sich sowohl mono- wie bifunktionelle metallorganische Verbindungen einsetzen. Aus Gründen der Preiswürdigkeit und Handhabbarkeit werden vorzugsweise n-Butyl- oder sek-Butyllithium eingesetzt.

Um schlagzähe Formmassen zu erhalten, wird die vinylaromatische Verbindung in Gegenwart einer Elastomerkomponente polymerisiert. Als solche eignen sich Block-Kautschuke auf Basis Butadien oder Isopren und Styrol vom Typ S-B, S-B-S oder B-S-B bzw. S-B-S-B mit einem Styrolanteil (S) von 5 bis 70 %. Das Verhältnis von Alkadien (B) und Styrol (S) in der Elastomerphase legt die Teilchenstruktur fest, die beim Phasenumschlag während der Polymerisation der vinylaromatischen Verbindung entsteht. Einzelheiten hierzu finden sich in der Veröffentlichung von Echte et al. in Angew. Makromol. Chem. 90, 95 (1980). Das Elastomer wird in einer Menge von 3 - 25 %, vorzugsweise 5 - 20 % bezogen auf die thermoplastische Formmasse eingesetzt.

Unter vinylaromatischen Verbindungen sind anionisch polymerisierbare Substanzen vom Typ des Styrols selbst und seiner Substitutionsprodukte zu verstehen. Als Beispiele seien genannt α-Methylstyrol, Ethylstyrol, Vinyltoluol oder tert-Butylstyrol. Diese Verbindungen können für sich allein oder im Gemisch untereinander eingesetzt werden.

Um Formmassen hoher Zähigkeit zu erhalten, ist es zweckmäßig, den vinylaromatischen Anteil der Elastomerkomponente mit der Verbindung aufzubauen, aus der auch die Hartmatrix hergestellt wird.

### Beispiel 1

10 Teile eines Butadien-Styrol-Zweiblockkautschuks mit einem Polystyrolblock mit einem Molekulargewicht von 45 000 mol und einem Polybutadienblock mit einem Molgewicht von 180 000 wurden in 45 Teilen destilliertem und über Al₂O₃ getrocknetem Toluol gelöst.

Es wurde eine aus 2 Rührkesseln und 2 sog. Turmreaktoren (vgl. DE 1770392) bestehende Kaskade verwendet; die einzelnen Reaktionsapparate hatten ein Volumen von 1 und 2 Litern (Kessel) sowie jeweils 4 Litern (Turmreaktoren) .

Diese Lösung wurde dem ersten Rührkessel mit einer Geschwindigkeit von 0,55 kg/h zugeführt. Dem ersten Reaktor wurde ebenfalls kontinuierlich eine 1%ige Lösung von sek-Butyllithium mit einer Geschwindigkeit von 40 ml/h zugeführt. Die Gesamtmenge von 0,9 kg/h Styrol wurde auf die vier Reaktoren im Verhältnis 1:2:3:3 aufgeteilt. Die Polymerisationstemperatur in den einzelnen Reaktoren betrug 70/70/80 und 90°C. Der Feststoffgehalt nach dem letzten Reaktor erreichte 68,9 % entsprechend einem Styrolumsatz von 100 %.

Dem aus dem letzten Reaktor abfließenden Polymerisatstrom wurde eine ausreichende Menge an Wasser und CO₂ zugesetzt. Anschließend wurde die Polymerlösung einer Entgasungseinrichtung zugeführt und bei 200°C und 3 mbar entgast. Der Gehalt der fertigen schlagfesten Polystyrol-Formmasse an nicht polymerisiertem Styrol wurde gaschromatographisch bestimmt und ergab 8 ppm.

### Beispiel 2

Beispiel 1 wurde wiederholt, wobei jedoch der Initiator im Verhältnis 1:1 auf den ersten Rührkessel und den ersten Turmreaktor aufgeteilt wurde und die Temperaturen im ersten und zweiten Reaktor auf 75 bzw. 80°C angehoben wurden. Der Restmonomergehalt betrug in diesem Fall 5 ppm.

## Patentansprüche

1. Verfahren zur kontinuierlichen Herstellung einer schlagzähen Formmasse durch anionische Polymerisation von Styrol oder einer anderen vinylaromatischen Verbindung oder deren Gemischen in Gegenwart eines Lösungsmittels und eines Blockkautschuks, dadurch gekennzeichnet, daß man die Polymerisation in mindestens 2 Reaktionsapparaten, die eine Reaktorkaskade bilden, vornimmt, wobei der Monomerstrom auf die vorhandenen Reaktionsapparate aufgeteilt wird, die lebenden Polymerkettenenden in an sich bekannter Weise abbricht und das Lösungsmittel entfernt.

2. Verfahren nach Anspruch 1, dadurch gekennzeichnet, daß man als Lösungsmittel Toluol, Ethylbenzol, Cyclohexan oder Methylcyclohexan verwendet.

3. Verfahren nach Anspruch 1, dadurch gekennzeichnet, daß die lebenden Kettenenden nach der Polymerisation mit einer protonenaktiven Substanz abgebrochen werden.

4. Verfahren nach Anspruch 3, dadurch gekennzeichnet, daß die lebenden Kettenenden mit CO₂/H₂O abgebrochen werden.

5. Verfahren nach Anspruch 1, dadurch gekennzeichnet, daß die Polymerisation bei einer Temperatur zwischen 40 und 150°C durchgeführt wird.

6. Verfahren nach Anspruch 1, dadurch gekennzeichnet, daß als Blockkautschuk ein Styrol-Butadien-Blockcopolymerisat mit einem Gewichtsverhältnis von Styrol zu Butadien von 5:95 bis 65:35 eingesetzt wird.

7. Verfahren nach Anspruch 1, dadurch gekennzeichnet, daß ein Umsatz von über 99,8 % vorgesehen ist.

8. Verfahren nach Anspruch 1, dadurch gekennzeichnet, daß der Initiatorzusatz auf mehrere oder alle Reaktionsapparate aufgeteilt wird.

## Claims

1. A process for the continuous preparation of an impact-resistant molding material by anionic polymerization of styrene or another aromatic vinyl compound or mixtures thereof in the presence of a solvent and a block rubber, characterized in that the polymerization is carried out in at least 2 reaction vessels that together form a reactor cascade, the monomer stream being subdivided among the reaction vessels present, the living polymer chain ends being terminated in a conventinal manner and the solvent being removed.

2. A process as claimed in claim 1, characterized in that the solvent used is toluene, ethylbenzene, cyclohexane or methylcyclohexane.

3. A process as claimed in claim 1, characterized in that the living chain ends are terminated after the polymerization with a proton-active substance.

4. A process as claimed in claim 3, characterized in that the living chain ends are terminated with CO₂/H₂O.

5. A process as claimed in claim 1, characterized in that the polymerization is carried out at from 40 to 150°C.

6. A process as claimed in claim 1, characterized in that the block rubber used is a styrene-butadiene block copolymer having a weight ratio of styrene to butadiene of from 5:95 to 65:35.

7. A process as claimed in claim 1, characterized in that a conversion of more than 99.8% is envisioned.

8. A process as claimed in claim 1, characterized in that the added initiator is subdivided among a plurality of or all the reaction vessels.

## Revendications

1. Procédé de production en continu d'une matière moulable résistant aux chocs par polymérisation anionique de styrène ou d'un autre composé vinylaromatique ou encore de leur mélange en présence d'un solvant et d'un caoutchouc séquencé, caractérisé en ce qu'on effectue la polymérisation dans au moins deux appareils réactionnels qui forment une cascade de réacteurs, dans lequel on répartit le courant de monomères sur les appareils réactionnels présents, on rompt d'une manière connue en soi les extrémités vivantes de la chaîne polymère et on élimine le solvant.

2. Procédé selon la revendication 1, caractérisé en ce qu'on utilise comme solvant, le toluène, l'éthyl-benzène, le cyclohexane ou le méthylcyclohexane.

3. Procédé selon la revendication 1, caractérisé en ce qu'on rompt les extrémités vivantes de la chaîne après la polymérisation avec une substance fixant les protons.

4. Procédé selon la revendication 3, caractérisé en ce qu'on rompt les extrémités vivantes de la chaîne avec CO₂/H₂O.

5. Procédé selon la revendication 1, caractérisé en ce qu'on effectue la polymérisation à une température entre 40 et 150°C.

6. Procédé selon la revendication 1, caractérisé en ce qu'on met en oeuvre comme caoutchouc séquencé, un copolymère séquencé de styrène-butadiène dont le rapport pondéral du styrène au butadiène se situe de 5:95 à 65:35.

7. Procédé selon la revendication 1, caractérisé en ce qu'on prévoit une conversion supérieure à 99,8%.

8. Procédé selon la revendication 1, caractérisé en ce qu'on répartit l'addition d'initiateurs sur plusieurs appareils réactionnels ou sur l'ensemble de ces derniers.
